# EUROPÄISCHE PATENTSCHRIFT

(11) **EP 3 718 684 B1**
(45) Veröffentlichungstag und Bekanntmachung des Hinweises auf die Patenterteilung: **29.03.2023**
(21) Anmeldenummer: 20173622.0
(22) Anmeldetag: 18.10.2017
(51) Int. Cl.: B23Q 1/00, B23Q 5/10, B23Q 17/22, B23Q 16/06

(54) **ARRETIEREINRICHTUNG FÜR EINE DREHVORRICHTUNG**
STOP DEVICE FOR A ROTARY DEVICE
DISPOSITIF DE BLOCAGE POUR UN DISPOSITIF TOURNANT

(30) Priorität: 19.12.2016 DE 102016124843
(43) Veröffentlichungstag der Anmeldung: 07.10.2020
(62) Teilanmeldung aus: 17787160.5
(73) Patentinhaber: Taktomat Kurvengesteuerte Antriebssysteme GmbH, 86554 Pöttmes (DE)
(72) Erfinder: Hofstetter, Norbert, 86676 Hollenbach (DE)
(74) Vertreter: Glück Kritzenberger Patentanwälte PartGmbB

(56) Entgegenhaltungen:
- EP-A2- 2 082 828
- CN-A- 104 526 460
- US-A- 2 796 776

## Beschreibung

Die Erfindung bezieht sich auf eine Arretiereinrichtung für eine Drehvorrichtung zur Aufnahme von mehreren Bearbeitungs- und Handlingseinheiten.

Derartige Drehvorrichtungen, die dem Fachmann auch als Drehtische bekannt sind, werden üblicherweise in der Herstellung und/oder Bearbeitung und/oder Verarbeitung von Werkstücken verwendet. Insbesondere werden derartige Drehvorrichtungen auch als Rundtakttische für schrittweise Arbeitsfolgen und Fertigungsprozesse verwendet, wobei sich solcherart ausgebildete Drehvorrichtungen sowohl für den horizontalen Einsatz als auch für den Vertikalbetrieb eignen. Beispielsweise werden Rundtakttische in Fertigungsstraßen der Automobilindustrie verwendet, um auf Trägergestellen beförderte Fahrzeugkarosserien insbesondere während der einzelnen Montageschritte an den entsprechenden Montagepositionen von den Trägergestellen auf durch Bearbeitungs- und Handlingseinheiten gebildete indexierte Halteposition abzusenken.

Mithin können derartige Drehvorrichtungen u.a. einen um eine Dreh- oder Schwenkachse rotierenden Drehkörper aufweisen, an dem beispielsweise mehrere Bearbeitungs- und Handlingseinheiten angeordnet sind. Hierfür können die Drehvorrichtungen durch einen Antrieb gesteuert angetrieben werden.

Insbesondere muss die gesteuerte Antriebsbewegung dabei den Drehkörper um einen sehr exakt vorgegeben Schrittwinkel weiterbewegen, also weiterdrehen. In der anschließend erreichten Halteposition, in der dann beispielsweise die Bearbeitung des Werkstückes erfolgt, müssen der Drehkörper bzw. die daran angeordneten Bearbeitungs- und Handlingseinheiten weitgehend spielarm, d.h. lagefixiert, arretiert werden.

Gefordert wird für derartige Drehvorrichtungen damit eine hohe Genauigkeit und Spielfreiheit des Antriebs, so dass jede erforderliche Dreh- oder Winkelstellung des Drehkörpers bzw. der daran angeordneten mehreren Bearbeitungs- und Handlingseinheiten mit hoher Präzision angefahren werden kann. Insbesondere wird oftmals auch gefordert, dass die angefahrene Dreh- oder Winkelstellung auch bei abgeschaltetem Antrieb stabil und exakt eingehalten wird.

Aus der auf die Anmelderin zurückgehenden Druckschrift DE 10 2013 109 307 A1 ist dabei eine Drehvorrichtung mit einer Aufnahme zur Aufnahme eines Werkstückes oder Werkzeuges bekannt geworden, bei der die Aufnahme durch einen Antrieb gesteuert um eine Aufnahmeachse schenk- oder drehbar ist und bei der der Antrieb als Antriebselement einen Torquemotor aufweist. Die Druckschrift DE 10 2013 109 307 A1 zeichnet sich dadurch aus, dass mit einer Ausgangswelle des Torquemotors eine Trommelkurve unmittelbar verbunden ist, die eine Achse der Ausgangswelle wendelartig umschließt und in die für den Antrieb der Aufnahme mit dieser verbundene Mitnehmer eingreifen. In anderen Worten wird also die um eine Aufnahmeachse drehbar gelagerte Aufnahme indirekt über den Torquemotor angetrieben, indem dieser eine lotrecht zur Aufnahmeachse drehende Trommelkurve antreibt. Das Ineinandergreifen der Aufnahme in die Trommelkurve erfolgt nach Art eines Getriebes mittel der Mitnehmer.

Insgesamt wird durch die Umlenkung der Antriebsbewegung der Ausgangswelle des Torquemotors auf die anzutreibende Aufnahme ein verhältnismäßig großer Bauraum zur Anordnung der Drehvorrichtung in beispielweise einer Fertigungslinie benötigt. Ferner gilt es zu berücksichtigen, dass die an der Aufnahme vorgesehenen Bearbeitungs- und Handlingseinheiten oftmals eine Energie- und/oder Datenversorgung in Form von beispielweise Energie-und/oder Datenversorgungsleitungen zum Betrieb der Bearbeitungs- und Handlingseinheiten benötigen. Die Zuführung derartiger Leitungen insbesondere bei sich rotierendem Drehkörper ist daher umständlich und nur schwer konstruktiv zu lösen.

Die CN 104 526 460 A offenbart eine Arretiereinrichtung mit einer gesteuert und/oder geregelt! betreibbaren Arbeitszylindereinrichtung, die einen Kolben aufweist.

Aufgabe der Erfindung ist es daher, eine Arretiereinrichtung für eine Drehvorrichtung zur Aufnahme von mehreren Bearbeitungs- und Handlingseinheiten aufzuzeigen, welche sich bei reduziertem Bauraum durch eine hochpräzise und nahezu toleranzfreie Arretierung des Drehkörpers auszeichnet.

Ein wesentlicher Aspekt der vorliegenden Erfindung ist darin zu sehen, eine Arretiereinrichtung für eine Drehvorrichtung zur Aufnahme von mehreren Bearbeitungs- und Handlingseinheiten vorzusehen, wobei die Drehvorrichtung wenigstens einen Trägerkörper mit einem darin um eine Dreh- oder Schwenkachse drehbar gelagerten Hohlwellenelement umfasst, bei dem an einem freien Ende ein Drehkörper zur Aufnahme der Bearbeitungs- und Handlingseinheiten angeordnet ist, wobei mittels der Arretiereinrichtung der Drehkörper der Drehvorrichtung verdrehsicher gegen eine Verdrehung um die Dreh- oder Schwenkachse arretierbar ist.

Die Arretiereinrichtung ist dabei zur Verrieglung bzw. mechanischen Arretierung des Drehkörpers der Drehvorrichtung in dessen jeweiliger Drehwinkelstellung ausgebildet. In anderen Worten kann also mittels der Arretiereinrichtung der Drehkörper verdrehsicher gegen eine Verdrehung um die Dreh- oder Schwenkachse arretiert werden. Hierfür weist der Drehkörper mehrere Indexöffnungen auf die beabstandet um die Dreh- oder Schwenkachse vorgesehen sind.

Bevorzugt sind die Indexöffnungen dabei in gleichmäßigen oder näherungsweise gleichmäßigen Winkelabständen auf einem identischen Radius um die Dreh- oder Schwenkachse verteilt vorgesehen. Weiterhin sind die Indexöffnungen derart ausgebildet, dass sie (Indexöffnungen) den Drehkörper vollständig in seiner Dicke durchdringen.

Dabei weist die Arretiereinrichtung wenigstens ein beispielsweise über die Steuereinrichtung gesteuert und/oder geregelt verschiebbares Bolzenelement auf, das als Indexstift ausgebildet sein kann, der zur Arretierung des Drehkörpers zumindest teilweise in eine korrespondierende Indexöffnung eingefahren (Rast- bzw. Arretierposition) und/oder aus der Indexöffnung wieder vollständig ausgefahren werden kann (Freigabeposition). In der eingefahrenen Rastposition, in der das Bolzenelement in die Indexöffnung vorzugsweise vollständig eingreift, ist der Drehkörper mechanisch lagefixiert, d.h. gegen eine Verdrehung um die Dreh- oder Schwenkachse gesichert, während das Bolzenelement den Drehkörper in der ausgefahrenen Freigabeposition für eine weitere Umdrehung um einen vorbestimmbaren Drehwinkel vollständig freigibt, also mechanisch nicht blockiert.

Erfindungsgemäß umfasst die Arretiereinrichtung zum Verfahren des Bolzenelementes eine gesteuert und/oder geregelt betreibbare Arbeitszylindereinrichtung, die wenigstens einen in einem Zylinder verfahrbar aufgenommen Kolben aufweist, der kraftschlüssig mit dem Bolzenelement zusammenwirkt. Die Arbeitszylindereinrichtung kann beispielsweise pneumatisch elektrisch betrieben ausgebildet sein.

Die Arretiereinrichtung eignet sich dabei besonders vorteilhaft für eine nachfolgend näher beschriebene Drehvorrichtung zur Aufnahme von mehreren Bearbeitungs- und Handlingseinheiten , umfassend wenigstens einen Trägerkörper mit einem darin um eine Dreh- oder Schwenkachse drehbar gelagerten Hohlwellenelement, bei dem an einem freiendseitigen Ende ein Drehkörper zur Aufnahme der Bearbeitungs- und Handlingseinheiten angeordnet ist und ein gegenüberliegender, nach außen abstehender Abschnitt des Hohlwellenelementes von einer Torque-Motor-Einheit aufgenommen ist, die zum direkten Antrieb des Hohlwellenelementes um die Dreh- oder Schwenkachse ausgebildet ist. Besonders vorteilhaft ist damit bei der Drehvorrichtung ein Antrieb des Drehkörpers ohne Zwischenschaltung einer Getriebeeinrichtung möglich, da das den Drehkörper antreibende Hohlwellenelement unmittelbar, also ohne Zwischenschaltung einer Getriebeeinrichtung, von der Torque-Motor-Einheit aufgenommen ist, die ihrerseits das Hohlwellenelement direkt antreibt. Besonders vorteilhaft fällt damit die Dreh- oder Schwenkachse des Hohlwellenelementes mit der Drehachse des Rotors der Torque-Motor-Einheit zusammen. Eine Umlenkung der Drehbewegung ist damit nicht notwendig, so dass die Drehvorrichtung mithin deutlich weniger Bauraum als eine im Vergleich dazu aus dem Stand der Technik bekannte Drehvorrichtung benötigt. Weiterhin kann der Drehkörper eine mit der Wellenöffnung fluchtende zentrale Öffnung zur Durchführung von Versorgungsleitungen oder dergleichen aufweisen, so dass damit eine einfache konstruktive Anbindung von Leitungen zur Energie- und/oder Datenversorgung an die Bearbeitungs- und Handlingseinheiten des Drehkörpers ermöglicht wird. Vorteilhaft können die mehreren Bearbeitungs- und Handlingseinheiten in gleichmäßigen oder näherungsweise gleichmäßigen Winkelabständen um die Dreh- oder Schwenkachse verteilt an dem Drehkörper angeordnet sein.

Bevorzugt kann der Drehkörper eine zentrale Öffnung zur Durchführung wenigstens einer flexiblen Energie- und/oder Datenleitungen aufweisen. Dabei kann die zentrale Öffnung mit einer Hohlwellenöffnung fluchtend ausgebildet sein. Weiterhin vorteilhaft können zur Beaufschlagung der mehreren Bearbeitungs- und Handlingseinheiten mit Energie und/oder Daten die wenigstens eine flexible Energie- und/oder Datenleitungen in der Hohlwellenöffnung des Hohlwellenelementes an die zentrale Öffnung des Drehkörpers und durch diese an eine entsprechende Bearbeitungs- und Handlingseinheit geführt ist.

In einer vorteilhaften Ausführungsvariante der Drehvorrichtung kann die Torque-Motor-Einheit entlang der Dreh- oder Schwenkachse seitlich an dem Trägerkörper vorgesehen sein und zwar derart, dass die Torque-Motor-Einheit das Hohlwellenelement radial im Bereich des Abschnitts umschließt.

Bevorzugt kann bei der Drehvorrichtung auch vorgesehen sein, dass sich die Torque-Motor-Einheit unmittelbar benachbart an den Trägerkörper entlang der Dreh- und Schwenkachse anschließt, und zwar auf der dem Drehkörper abgewandten Seite. Vorteilhaft ist die Torque-Motor-Einheit an dem Trägerkörper befestigt.

Dabei kann die Torque-Motor-Einheit vorteilhaft wenigstens einen Stator sowie einen relativ dazu um eine Antriebsachse drehbaren Rotor aufweisen. Weiterhin vorteilhaft kann der Rotor drehfest an dem Abschnitt des Hohlwellenelementes aufgenommen, insbesondere an dem Abschnitt befestigt sein. Gemäß einer alternativen Ausführungsvariante der Drehvorrichtung kann der Abschnitt als Rotor der Torque-Motor-Einheit ausgebildet sein. Ferner kann vorteilhafter Weise vorgesehen sein, dass der Rotor der Torque-Motor-Einheit um eine Antriebsachse dreht, die mit der Dreh- und Schwenkachse zusammenfällt.

Weiterhin vorteilhaft kann eine die Drehstellung des Drehkörper und/oder der Torque-Motor-Einheit erfassende Sensoreinrichtung vorgesehen sein.

Schließlich kann vorteilhaft wenigstens eine Arretiereinrichtung vorgesehen sein, die über ein verschiebbares Bolzenelement mit an dem Drehkörper vorgesehenen Indexöffnungen zusammenwirkt.

Unter "getaktet" wird im Rahmen der vorliegenden Erfindung eine intermittierende Bewegungen verstanden, die sich im Gegensatz zu einer kontinuierlichen Bewegung durch schrittweise oder periodisch wiederkehrende Bewegungsabläufe auszeichnen, und zwar mit einem Stillstand nach oder vor jedem Bewegungsschritt. Ein intermittierend bewegtes Element, das beispielsweise eine, um einen gewissen Winkelbetrag rotierende Abtriebswelle einer Torque-Motor-Einheit sein kann, vollzieht hierbei ein Bewegungsprofil, bei dem die Abtriebswelle periodisch nahezu stoß- und/oder ruckfrei auf eine gewisse Winkelgeschwindigkeit beschleunigt und anschließend wieder abgebremst wird.

Der Ausdruck *"*im Wesentlichen*"* bzw. *"*etwa*"* bzw. *"*ca.*"* bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung wird im Folgenden anhand der Figuren an einem Ausführungsbeispiel näher erläutert. Es zeigen:

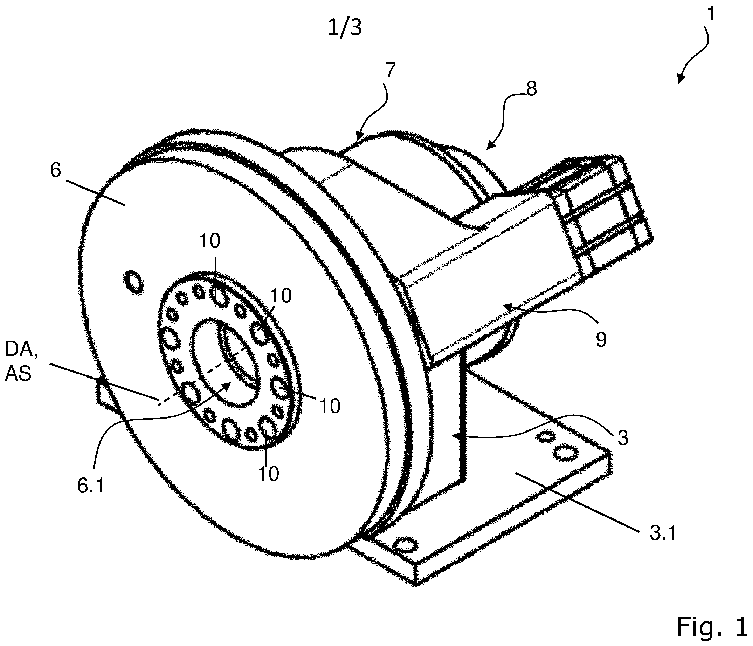

- Fig. 1: in vereinfachter perspektivischer Darstellung eine beispielhafte Ausführungsvariante einer erfindungsgemäßen Arretiereinrichtung mit einer Drehvorrichtung;
- Fig. 2: in Seitenansicht eine schematisierte Schnittdarstellung im Bereich des Hohlwellenelementes einer Drehvorrichtung gemäß Figur 1,

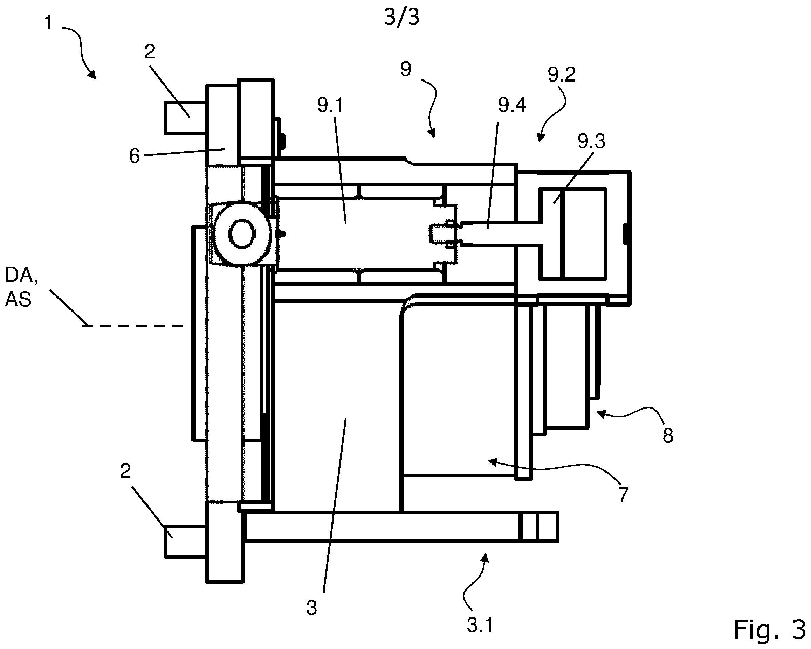

- Fig. 3: in Seitenansicht eine weitere schematisierte Schnittdarstellung im Bereich der Arretiereinrichtung einer Drehvorrichtung gemäß Figur 1.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

In den Figuren ist mit 1 eine beispielhafte Ausführungsvariante einer Drehvorrichtung zur Aufnahme von mehreren Bearbeitungs- und Handlingseinheiten 2 gezeigt, die sich vorteilhaft für eine erfindungsgemäße Arretiereinrichtung 9 eignet und die wenigstens einen Trägerkörper 3 mit einem darin um eine Dreh- oder Schwenkachse DA drehbar gelagerten Hohlwellenelement 4 umfasst. Bei den nur stilisiert in den Figuren dargestellten Bearbeitungs- und Handlingseinheiten 2 kann es sich insbesondere um Bodenspanner handeln, die beispielsweise verwendet werden, um auf Trägergestellen entlang einer Montagelinie beförderte Fahrzeugkarosserien insbesondere während der einzelnen Montageschritte an den entsprechenden Montagepositionen von den Trägergestellen auf die entsprechenden an einer Drehvorrichtung 1 angeordneten Bodenspanner abzusenken.

In der Regel sind hierfür je nach Fahrzeugtyp, bzw. Fahrzeugkarosse zwischen vier und sechs Bodenspanner, und damit auch vier bis sechs Drehvorrichtungen 1 erforderlich, die um ein sich in einer Montageposition befindliches Trägergestell angeordnet sind. Vorzugsweise sind dabei jeweils zwei Drehvorrichtungen 1 an entlang der Längsseite des Trägergestells gegenüberliegenden Positionen vorgesehen, beispielweise derart, dass die entsprechende Karosserie sowohl in ihrem vorderen, als auch hinteren Bereich auf jeweils zwei gegenüberliegenden oder im Wesentlichen gegenüberliegen Auflagepunkten abgesenkt werden kann.

Vorzugsweise können an einer Drehvorrichtung 1 mehrere Bearbeitungs- und Handlingseinheiten 2, beispielweise unterschiedliche Bodenspanner, vorgesehen sein, die beispielsweise an unterschiedliche Abmessungen der Fahrzeugkarossen bzw. Fahrzeugtypen angepasst sind. Vorteilhaft sind die mehreren Bearbeitungs- und Handlingseinheiten 2 an einem Drehkörper 6 fest, jedoch austauschbar, beispielsweise verschraubt, angeordnet. Die mehreren Bearbeitungs- und Handlingseinheiten 2 können in gleichmäßigen oder näherungsweise gleichmäßigen Winkelabständen um die Dreh- oder Schwenkachse DA verteilt an dem Drehkörper 6 angeordnet sein, in beispielweise einen gleichen radialen Abstand zur die Dreh- oder Schwenkachse DA. Besonders vorteilhaft sind vier Bearbeitungs- und Handlingseinheiten 2 an dem Drehkörper 6 vorgesehen, wobei die Bearbeitungs- und Handlingseinheiten 2 jeweils paarweise gegenüberliegend an dem Drehkörper 6 angeordnet sind.

Hierbei kann es erforderlich sein, dass die Bearbeitungs- und Handlingseinheiten 2 mit Energie und/oder Daten beaufschlagt werden. Die Bereitstellung und/oder Zuführung der für das Betreiben der entsprechenden Bearbeitungs- und Handlingseinheiten 2 notwendigen Energie und/oder Daten kann über vorzugsweise flexible Energie- und/oder Datenleitungen DL erfolgen, die insbesondere von außerhalb der entsprechenden Drehvorrichtung 1 über, bzw. in dem Hohlwellenelement 4 an die jeweiligen Bearbeitungs- und Handlingseinheiten 2 geführt sein können.

Der Trägerkörper 3 ist dabei aus einem stabilen Material, beispielsweise einem metallischen Werkstoff hergestellt, und dazu ausgebildet, die einzelnen, vorzugsweise sämtliche, Bauteile bzw. Baugruppen der Drehvorrichtung 1 zu halten bzw. aufzunehmen. Insbesondere kann der Trägerkörper einen Befestigungsabschnitt 3.1 aufweisen, über den die Drehvorrichtung 1 an beispielsweise einem Montagegestell einer Fertigungslinie der Automobilindustrie befestigbar ist. Der Befestigungsabschnitt 3.1 kann dabei als Befestigungsplatte ausgebildet sein, die vorzugsweise einstückig mit dem Trägerkörper 3 ausgebildet ist.

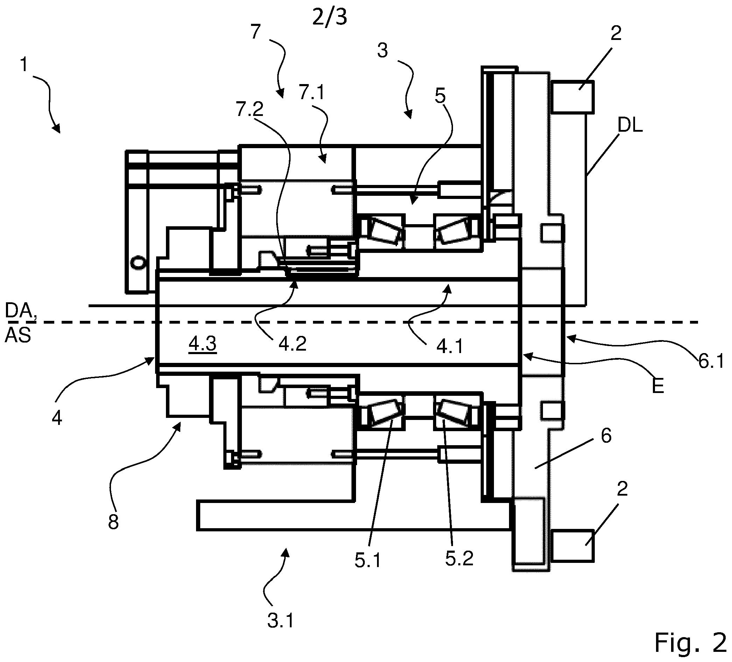

Ferner nimmt der Trägerkörper 3 dabei in seinem Inneren das um die Dreh- oder Schwenkachse DA drehbar gelagerte Hohlwellenelement 4 auf, welches vorzugsweise als metallische Hohlwelle mit einem freien Innenvolumen, d.h. nicht massiv, ausgebildet sein kann. Zur drehbaren Lagerung des Hohlwellenelementes 4 in dem Trägerkörper 3 können dabei Lagereinrichtungen 5, beispielsweise Wälzlager vorgesehen sein, die kontaktschlüssig zwischen der Außenmantelfläche des in dem Trägerkörper 3 aufgenommen ersten Abschnittes 4.1 des Hohlwellenelementes 4 und dem Trägerkörper 3 vorgesehen sein können. Insbesondere liegen die Lagereinrichtungen 5 dabei kontaktschlüssig an der Außenmantelfläche des Hohlwellenelementes 4 an, und zwar derart, dass die Lagereinrichtungen die Außenmantelfläche des Trägerkörpers 3 konzentrisch um die Dreh- oder Schwenkachse DA vorzugsweise vollumfänglich kontaktschlüssig umschließen. Gemäß der gezeigten Ausführungsvariante der Figur 2 weist die Drehvorrichtung 1 dabei zwei Lagereinrichtungen 5, nämlich eine erste sowie eine zweite Lagereinrichtung 5.1, 5.2 auf, die entlang der Dreh- oder Schwenkachse DA beabstandet zueinander vorgesehen sein können.

Vorteilhaft ist an einem freien Ende E des Hohlwellenelementes 4 ein Drehkörper 6 zur Aufnahme der Bearbeitungs- und Handlingseinheiten 2 angeordnet. Insbesondere ist der Drehkörper 6 dabei an dem freien Ende E drehfest, also kinematisch gekoppelt, an dem Hohlwellenelement 4 vorgesehen, beispielweise an dem Hohlwellenelement 4 fest aber lösbar, insbesondere verschraubt, angeordnet. Der Drehkörper 6 kann dabei als rotationssymmetrisch zur Dreh- oder Schenkachse DA, beispielsweise scheibenförmig, ausgebildet sein und aus einem metallischen Werkstoff herstellt werden. Beispielweise ist der Drehkörper 6 als metallische, scheibenförmige Platte, vorzugsweise als Drehscheibe, ausgebildet. Ferner kann der Drehkörper 6 eine zentrale, d.h. mittige, Öffnung 6.1 zur Durchführung von Versorgungsleitungen in Form von flexiblen Energie- und/oder Datenleitungen DL aufweisen, wobei die Öffnung 6.1 vorzugsweise mit einer Hohlwellenöffnung 4.3, also dem freien Innenvolumen des Hohlwellenelementes 4, fluchtend ausgebildet ist.

Mithin weist das Hohlwellenelement 4 zudem einen, dem freien Ende E gegenüberliegenden, und nach außen abstehenden, d.h. seitlich über den Trägerkörper 3 überstehenden bzw. diesen seitlich überragenden, Abschnitt 4.2 auf, der von einer Torque-Motor-Einheit 7 aufgenommen ist, die zum direkten Antrieb des Hohlwellenelementes 4 um die Dreh- oder Schwenkachse DA ausgebildet ist. Insbesondere kann die Torque-Motor-Einheit 7 dabei seitlich an dem Trägerkörper 3 lösbar befestigt, beispielsweise angeflanscht, sein und zwar derart, dass die Torque-Motor-Einheit 7 das Hohlwellenelement 4 radial im Bereich des Abschnitt 4.2 umschließt. Vorzugsweise schließt sich die Torque-Motor-Einheit 7 damit unmittelbar benachbart an den Trägerkörper 3 entlang der Dreh- und Schwenkachse DA an, und zwar auf der dem Drehkörper 6 abgewandten Seite.

Dabei ist das Hohlwellenelement 4 unmittelbar, d.h. getriebelos, durch die Torque-Motor-Einheit 7 in beiden Drehrichtungen, also sowohl in, als auch gegen den Uhrzeigersinn, vorzugsweise um jeweils wenigstens 360° antreibbar ausgebildet. Mittels der Torque-Motor-Einheit 7 ist das Hohlwellenelement 4 getaktet und/oder kontinuierlich antreibbar. Insbesondere ist die Drehbewegung des Hohlwellenelementes 4 getaktet, beispielsweise stufenlos oder im Wesentlichen stufenlos oder in sehr kleinen Stufen steuer- und/oder regelbar, ausgebildet, wobei eine Taktung einem vordefinierbaren Schrittwinkel, also einem festen Drehwinkel des Hohlwellenelementes 4 entsprechen kann. Zudem sind auch die von der Torque-Motor-Einheit 7 jeweils während einer Taktung gefahrenen Winkelgeschwindigkeiten steuer- und/oder regelbar ausgebildet. Vorzugsweise ist die Torque-Motor-Einheit 7 nur während der eigentlichen Antriebs- bzw. Drehbewegung mit elektrischer Energie beaufschlagt.

Dabei umfasst die Torque-Motor-Einheit 7 wenigstens einen Stator 7.1 sowie einen sich relativ dazu um die Dreh- und Schwenkachse DA drehenden Rotor 7.2. In einer bevorzugten Ausführungsvariante ist die Torque-Motor-Einheit 7 über ihren Stator 7.1 mit dem Trägerkörper 3 fest verbunden, bzw. an diesem angeordnet, insbesondere angeflanscht. Weiterhin ist der Rotor 7.2 fest, insbesondere drehfest, mit dem Abschnitt 4.2 des Hohlwellenelementes 4 verbunden und überträgt damit die Drehbewegung unmittelbar auf das Hohlwellenelement 4. In einer alternativen Ausführungsvariante der Erfindung kann auch der Abschnitt 4.2 des Hohlwellenelementes 4 den Rotor 7.2 der Torque-Motor-Einheit 7 bilden. Besonders vorteilhaft dreht dabei der Rotor 7.2 der Torque-Motor-Einheit 7 um eine Antriebsachse AS, die mit der Dreh- und/oder Schwenkachse DA zusammenfällt.

Die Ansteuerung der Torque-Motor-Einheit 7 kann über eine nicht weitergehend dargestellte elektrische und/oder elektronische Steuereinrichtung erfolgen, und zwar vorzugsweise unter Einbindung bzw. die Abhängigkeit von dem Signal wenigstens einer die jeweilige Drehstellung der Torque-Motor-Einheit 7 erfassenden Sensoreinrichtung 8. Die Sensoreinrichtung 8 kann beispielweise als Inkrementalgeber ausgebildet sein.

Ferner kann für die Drehvorrichtung 1 zur Verrieglung bzw. mechanischen Arretierung des Drehkörpers 6 in dessen jeweiliger Drehwinkelstellung eine Arretiereinrichtung 9 vorgesehen sein. Die Drehvorrichtung 1 kann die Arretiervorrichtung 9 ausweisen. In anderen Worten kann also mittels der Arretiereinrichtung 9 der Drehkörper 6 verdrehsicher gegen eine Verdrehung um die Dreh- oder Schwenkachse DA arretiert werden. Hierfür kann der Drehkörper 6 mehrere Indexöffnungen 10 aufweisen, die vorzugsweise radial beabstandet um die Öffnung 6.1, bzw. die Dreh- oder Schwenkachse DA vorgesehen sind.

Bevorzugt sind die Indexöffnungen 10 dabei in gleichmäßigen oder näherungsweise gleichmäßigen Winkelabständen auf einem identischen Radius um die Dreh- oder Schwenkachse DA verteilt vorgesehen. Weiterhin sind die Indexöffnungen 10 derart ausgebildet, dass sie (Indexöffnungen 10) den Drehkörper 6 vollständig in seiner Dicke durchdringen.

Dabei weist die Arretiereinrichtung 9 wenigstens ein beispielsweise über die Steuereinrichtung gesteuert und/oder geregelt verschiebbares Bolzenelement 9.1 auf, das insbesondere als Indexstift ausgebildet sein kann, der zur Arretierung des Drehkörpers 6 zumindest teilweise in eine korrespondierende Indexöffnung 10 eingefahren (Rast- bzw. Arretierposition) und/oder aus der Indexöffnung 10 wieder vollständig ausgefahren werden kann (Freigabeposition). In der eingefahrenen Rastposition, in der das Bolzenelement 9.1 in die Indexöffnung 10 vorzugsweise vollständig eingreift, ist der Drehkörper 6 mechanisch lagefixiert, d.h. gegen eine Verdrehung um die Dreh- oder Schwenkachse DA gesichert, während das Bolzenelement 9.1 den Drehkörper 6 in der ausgefahrenen Freigabeposition für eine weitere Umdrehung um einen vorbestimmbaren Drehwinkel vollständig freigibt, also mechanisch nicht blockiert.

Beispielsweise kann die Arretiereinrichtung 9 zum Verfahren des Bolzenelementes 9.1 eine gesteuert und/oder geregelt betreibbare Arbeitszylindereinrichtung 9.2 umfassen, die wenigstens einen in einem Zylinder 9.3 verfahrbar aufgenommenen Kolben 9.4 aufweist, der kraftschlüssig mit dem Bolzenelement 9.1 zusammenwirkt. Die Arbeitszylindereinrichtung 9.2 kann beispielsweise pneumatisch elektrisch betrieben ausgebildet sein.

### Bezugszeichenliste

- 1: Drehvorrichtung
- 2: Bearbeitungs- und Handlingseinheit
- 3: Trägerkörper
- 3.1: Befestigungsabschnitt
- 4: Hohlwellenelement
- 4.1: erster Abschnitt
- 4.2: überstehender Abschnitt
- 4.3: Hohlwellenöffnung
- 5: Lagereinrichtung
- 5.1: erste Lagereinrichtung
- 5.2: zweite Lagereinrichtung
- 6: Drehkörper
- 6.1: Öffnung
- 7: Torque-Motor-Einheit
- 7.1: Stator
- 7.2: Rotor
- 8: Sensoreinrichtung
- 9: Arretiereinrichtung
- 9.1: Bolzenelement
- 9.2: Arbeitzylindereinrichtung
- 9.3: Zylinder
- 9.4: Kolben
- 10: Indexöffnung

- AS: Antriebsachse
- DA: Dreh- oder Schwenkachse
- DL: Energie- oder Datenleitung
- E: freies Ende

## Patentansprüche

1. Arretiereinrichtung (9) für eine Drehvorrichtung (1) zur Aufnahme von mehreren Bearbeitungs- und Handlingseinheiten (2), wobei die Drehvorrichtung (1) wenigstens einen Trägerkörper (3) mit einem darin um eine Dreh- oder Schwenkachse (DA) drehbar gelagerten Hohlwellenelement (4) umfasst, bei dem an einem freien Ende (E) ein Drehkörper (6) zur Aufnahme der Bearbeitungs- und Handlingseinheiten (2) angeordnet ist, wobei mittels der Arretiereinrichtung (9) der Drehkörper (6) der Drehvorrichtung (1) verdrehsicher gegen eine Verdrehung um die Dreh- oder Schwenkachse (DA) arretierbar ist, wobei die Arretiereinrichtung (9) wenigstens ein Bolzenelement (9.1) aufweist und zum Verfahren des Bolzenelementes (9.1) eine gesteuert und/oder geregelt betreibbare Arbeitszylindereinrichtung (9.2) umfasst, die wenigstens einen in einem Zylinder (9.3) verfahrbar aufgenommenen Kolben (9.4) aufweist, der kraftschlüssig mit dem Bolzenelement (9.1) zusammenwirkt, wobei das wenigstens eine verschiebbare Bolzenelement (9.1) mit an dem Drehkörper (6) vorgesehenen Indexöffnungen (10) zusammenwirkt, die radial beabstandet um die Dreh- oder Schwenkachse (DA) vorgesehen sind und wobei die Arretiereinrichtung (9) zur Verriegelung und/oder mechanischen Arretierung des Drehköpers (6) in dessen jeweiligen Drehwinkelstellung ausgebildet ist.

2. Arretiereinrichtung nach Anspruch 1, **dadurch gekennzeichnet, dass** das wenigstens eine Bolzenelement (9.1) der Arretiereinrichtung (9) als gesteuerter- und/oder geregelter Indexstift ausgebildet ist, der in einer Rastposition zur Arretierung des Drehkörpers (6) zumindest teilweise in eine korrespondierende Indexöffnung (10) eingefahren und/oder aus der Indexöffnung (10) vollständig für eine Freigabeposition ausgefahren werden kann.

3. Arretiereinrichtung nach einem der vorangehenden Ansprüche, **dadurch gekennzeichnet, dass** in der eingefahrenen Rastposition das Bolzenelement (9.1) vollständig in die Indexöffnung (10) eingreift und der Drehkörper (6) mechanisch fixiert ist.

4. Arretiereinrichtung nach einem der vorangehenden Ansprüche, **dadurch gekennzeichnet, dass** in der ausgefahrenen Freigabeposition das Bolzenelement (9.1) den Drehkörper (6) für eine weitere Umdrehung um einen vorbestimmbaren Drehwinkel vollständig freigibt.

## Claims

1. Locking device (9) for a rotating device (1) for holding a plurality of machining and handling units (2), wherein the rotating device (1) comprises at least one carrier body (3) with a hollow shaft element (4) mounted therein rotatably about a rotation or swivel axis (DA), wherein a rotating member (6) for accommodating the machining and handling units (2) is arranged at a free end (E), wherein the rotating member (6) of the rotating device (1) can be locked rotation-proof by means of the locking device (9) against a rotation about the rotation or swivel axis (DA), wherein the locking device (9) comprises at least one bolt element (9.1) and a working cylinder arrangement (9.2) which can be operated in a controlled and/or regulated manner for the displacement of the bolt element (9.1), which working cylinder arrangement comprises at least one piston (9.4) accommodated in a displaceable manner in a cylinder (9.3), which cooperates in a force-locked manner with the bolt element (9.1), wherein the at least one displaceable bolt element (9.1) cooperates with index openings (10) provided on the rotating member (6), which are provided radially spaced apart around the rotation or swivel axis (DA) and wherein the locking device (9) is designed for locking and/or mechanical locking of the rotating member (6) in its respective rotation angle position.

2. Locking device according to claim 1, **characterised in that** the at least one bolt element (9.1) of the locking device (9) is configured as a controlled and/or regulated index pin, which in a locking position for locking the rotating member (6) can be inserted at least partially into a corresponding index opening (10) and/or can be retracted completely from the index opening (10) for a release position.

3. Locking device according to any one of the preceding claims, **characterised in that** in the inserted locking position the bolt element (9.1) engages completely in the index opening (10) and the rotating member (6) is mechanically fixed.

4. Locking device according to any one of the preceding claims, **characterised in that** in the retracted release position the bolt element (9.1) completely releases the rotating member (6) for a further rotation about a predetermined rotation angle.

## Revendications

1. Dispositif de blocage (9) pour un dispositif rotatif (1) pour loger plusieurs unités d'usinage et de manutention (2), sachant que le dispositif rotatif (1) comprend au moins un corps de support (3) avec un élément à arbre creux (4) logé dedans pouvant tourner autour d'un axe de rotation ou de pivotement (DA), pour lequel un corps rotatif (6) est disposé à un extrémité libre (E) pour loger les unités d'usinage et de manutention (2), sachant qu'au moyen du système de blocage (9), le corps rotatif (6) du dispositif rotatif (1) peut être bloqué de façon sécurisée en rotation contre une mise en rotation autour de l'axe de rotation ou de pivotement (DA), sachant que le système de blocage (9) comporte au moins un élément de boulon (9.1) et comprend pour le déplacement de l'élément de boulon (9.1), un dispositif à vérin de travail (9.2) pouvant être utilisé de façon commandée et/ou régulée, qui comporte au moins un piston (9.4) logé mobile dans un vérin (9.3), qui coopère par conformité de force avec l'élément de boulon (9.1), sachant que le au moins un élément de boulon (9.1) mobile coopère avec les ouvertures d'indexage (10) prévues sur le corps rotatif (6), qui sont prévues radialement espacées autour de l'axe de rotation ou de pivotement (DA) et sachant que le système de blocage (9) est constitué pour le verrouillage et/ou le blocage mécanique du corps rotatif (6) dans la position angulaire de rotation respective de celui-ci.

2. Dispositif de blocage selon la revendication 1, **caractérisé en ce que** le au moins un élément de boulon (9.1) du système de blocage (9) est constitué comme une tige d'indexage commandée et/ou régulée, qui peut être rentrée dans une position d'enclenchement pour le blocage du corps rotatif (6) au moins en partie dans une ouverture d'indexage (10) correspondante et/ou peut être sortie de l'ouverture d'indexage (10) complètement pour une position de déblocage.

3. Dispositif de blocage selon l'une quelconque des revendications précédentes, **caractérisé en ce que** dans la position d'enclenchement rentrée, l'élément de boulon (9.1) vient complètement en prise dans l'ouverture d'indexage (10) et le corps rotatif (6) est mécaniquement fixé.

4. Dispositif de blocage selon l'une quelconque des revendications précédentes, **caractérisé en ce que** dans la position de déblocage sortie, l'élément de boulon (9.1) libère complètement le corps rotatif (6) pour une autre révolution d'un angle de rotation pouvant être prédéterminé.
